# EUROPÄISCHE PATENTSCHRIFT

(11) **EP 2 588 763 B1**
(45) Veröffentlichungstag und Bekanntmachung des Hinweises auf die Patenterteilung: **27.04.2016**
(21) Anmeldenummer: 11730901.3
(22) Anmeldetag: 14.05.2011
(51) Int. Cl.: B01D 1/14, C10M 175/00, F15B 21/04

(54) **VORRICHTUNG ZUM ENTFEUCHTEN EINES HYDRAULISCHEN MEDIUMS**
DEVICE FOR REMOVING MOISTURE FROM A HYDRAULIC MEDIUM
DISPOSITIF POUR HUMIDIFIER UNE SUBSTANCE HYDRAULIQUE

(30) Priorität: 01.07.2010 DE 102010025736
(43) Veröffentlichungstag der Anmeldung: 08.05.2013
(73) Patentinhaber: Hydac Filter Systems GmbH, 66280 Sulzbach/Saar (DE)
(72) Erfinder: KLEBER, Jörg, 66538 Neunkirchen (DE); WILHELM, Andreas, 66763 Dillingen (DE)
(74) Vertreter: Bartels, Martin Erich Arthur
(86) Internationale Anmeldenummer: PCT/EP2011/002403
(87) Internationale Veröffentlichungsnummer: WO 2012/000584

(56) Entgegenhaltungen:
- EP-A2- 1 736 665
- WO-A1-2009/087059
- US-A- 6 128 825
- US-A1- 2002 063 087
- US-A1- 2006 086 249

## Beschreibung

Die Erfindung betrifft eine Vorrichtung zum Entfeuchten eines hydraulischen Mediums mit den Merkmalen im Oberbegriff von Anspruch 1.

In hydraulischen Anlagen, beispielsweise in Form von Großgetrieben, sind hydraulische Medien, wie Schmierstoffe od. dgl., wechselnden Umgebungsbedingungen ausgesetzt. Hieraus kann ein ungewollter Eintrag von Partikeln, auch in Form von Wasser, in den Schmierstoff resultieren, was grundsätzlich mit einer Verschlechterung der physikalischen Eigenschaften, insbesondere in Bezug auf die angestrebte Schmierfähigkeit solcher Schmierstoffe, einhergeht. Ein typischer Vertreter für die dahingehende Problematik sind Getriebe von Windenergieanlagen. Um die Drehzahl eines Rotors einer Windenergieanlage auf eine zum Antrieb eines Generators geeignete Drehzahl zu transformieren, werden regelmäßig Stirnradgetriebe in der Art von Planetenradgetrieben oder Hohlradpaar-Systemeneingesetzt. Der Rotor aus einer Nabe mit zwei oder mehreren Flügeln bildet für das Getriebe einen Antrieb mit einem hohen Drehmoment aus bei einer bekanntermaßen sehr kleinen Drehzahl. Das Getriebe bildet wiederum für den Generator einen Antrieb mit einem geringeren Drehmoment aus mit einer beispielsweise um ein auf das 80-fache übersetzten Drehzahl.

Dafür werden seit mehr als 20 Jahren beispielsweise im Bauraumbedarf vergleichsweise kleinbauende Planetenradgetriebe eingesetzt. Solche Übersetzungsgetriebe sind in vielerlei Hinsicht in ihren Komponenten belastete Einheiten, deren Verschleiß zu minimieren ist, da Wartung, Reparatur und der Austausch von Verschleiß-Schlüsselkomponenten solcher Getriebe häufig aufwendig und kostenintensiv sind.

Derartige Getriebe können aufgrund ihrer teilweise mannshohen Komponenten entweder durch eine Umlaufschmierung unter steter Förderung und Antrag von Schmiermittel durch Getriebeölpumpen aus einem Getriebeölsumpf an die betreffenden Zahnräder und Lagerstellen oder durch Tauchschmiersysteme geschmiert werden. Bei Tauchschmiersystemen tauchen die Zahnräder des Getriebes in Tauchbädern mit einem Schmiermittelvorrat teilweise ein.

Solche insbesondere durch ein großes Volumen oder durch große Getriebegehäuse-Innenflächen sich auszeichnende Getriebe neigen zur Ansammlung von Kondenswasser in ihrem Inneren. Dieser Vorgang wird insbesondere bei iterativ betriebenen Getrieben durch deren intervallartige Erwärmung mit anschließender Abkühlung begünstigt.

Getriebe von Windenergieanlagen sind in Abhängigkeit von ihrem Aufstellungsort mehr oder weniger zyklischen Betriebs- und Ruhephasen aufgrund des schwankenden Windvorkommens ausgesetzt. Zudem sind diese Getriebe zwar in Anlagegehäusen, beispielsweise auf einem Turm einer Windenergieanlage, untergebracht; jedoch sind sie stärker, als dies bei anderen stationär in einer definierten Umgebung angeordneten Getrieben dies der Fall ist, den wechselnden Witterungsbedingungen, insbesondere feuchter Luft, ausgesetzt. Dadurch kann es zu einer Anhebung des Wassergehaltes in dem Schmiermittel solcher Getriebe kommen. Wasser beeinflusst die physikalischen Eigenschaften von Schmiermitteln, wie Getriebeöl, in negativer Weise und kann zu einer vorzeitigen Alterung von Schmieröl mit beitragen, was sich wiederum schädigend auf die Getriebebestandteile mit auswirkt.

Um die Luftfeuchte in einem Getriebegehäuse und damit auch den Wassergehalt in einem Schmieröl herabzusetzen, ist es beispielsweise durch die DE 100 31 004 B4 bekannt, ein Behältnis mit Aluminiumoxyd zu verwenden, das ein absorptives Mittel für Feuchtigkeit in der Luft beinhaltet. Bei der bekannten Lösung ist die Luftführung derart gewählt, dass diese durch das absorptive Mittel hindurchströmt. Es werden Rückschlagventile dazu eingesetzt, um das Behältnis mit absorptivem Mittel nur bei Luftzufuhr, nicht jedoch bei Luftabfuhr zu durchströmen. Dadurch ist ein Rückströmen von ölhaltiger Luft, beispielsweise aus einem Getriebesumpf, welcher von der getrockneten Luft aus dem Behältnis überstrichen wird, verhindert.

Aus der EP 0 135006 A2 ist es ebenfalls grundsätzlich bekannt, eine Vorrichtung zum Belüften mit getrockneter Luft dahingehend auszubilden, dass ein chemisch wirksames Trocknungsmittel eingesetzt wird, das von Luft durchströmbar ist, die dann dabei entfeuchtet wird. Die bekannten Vorrichtungen sind für einen dauerhaften Betrieb mit langen Wartungsintervallen, wie sie der Betrieb einer Windkraftanlage grundsätzlich vorsieht, nur bedingt geeignet. Zudem ist der Volumenstrom bereitgestellter, getrockneter Luft durch solche Vorrichtungen begrenzt.

Aus EP 1 736 665 A2 ist eine Turmentfeuchtung einer Windenergieanlage bekannt. Die bekannte Windenergieanlage weist einen gegen Luftaustausch zumindest im Wesentlichen abgedichteten Innenraum und eine über einen Feuchtlufteingang und einen Trockenluftausgang mit dem Innenraum in Verbindung stehende, zwischen diesen angeordnete Entfeuchtungseinrichtung auf. Die bekannte Entfeuchtungseinrichtung zieht feuchte Luft aus dem Innenraum der Windenergieanlage ab, entzieht dieser Wasser und führt diese kreislaufartig zurück in den Innenraum. Am Feuchtlufteinlass ist durch Ansaugen von feuchter Luft aus dem Innenraum ein Unterdruckbereich erzeugbar und entsprechend am Trockenluftauslass durch Ausstoßen getrockneter Luft in den Innenraum ein Überdruckbereich, so dass sich zwischen dem Unterdruckbereich und dem Überdruckbereich ein trocknender Luftstrom im Innenraum ausbildet. Die Entfeuchtungseinrichtung entzieht der Luft aus dem Innenraum Feuchtigkeit und kann eine Heizeinrichtung aufweisen.

Die US 2002/0063087 A1 beschreibt ein Verfahren und eine Vorrichtung zur Trocknung von industriell genutzten, flüssigen Betriebsstoffen. Es ist ein Filtergehäuse vorgesehen, das von einem Filter in eine Kammer zum Eintrag von zu filtrierendem Betriebsstoff und eine Kammer für filtrierten Betriebsstoff unterteilt ist. Ferner ist ein Entfeuchter zum Vorbeiführen eines gasförmigen Trocknungsmediums an einer von dem flüssigen Betriebsstoff benetzten Membran vorgesehen. Der Entfeuchter kann dauerhaft oder intermittierend betrieben werden, wobei nicht offenbart wird, wie der intermittierende Betrieb gesteuert wird.

Die US 2006/0086249 A1 offenbart eine Vorrichtung zum Entfeuchten eines hydraulischen Mediums mit zumindest einem gasförmigen Trocknungsmedium, wobei das Trocknungsmedium Luft und/oder ein sonstiges Arbeitsgas mit entsprechender Feuchteaufnahmekapazität ist, das mittels einer Fördereinrichtung nur dann aus einer Umgebung des hydraulischen Mediums an das hydraulische Medium geführt ist, wenn die Feuchte des jeweiligen gasförmigen Trocknungsmediums geringer ist als der Wasser-Sättigungsgrad des hydraulischen Mediums. Dies wird dadurch sichergestellt, dass das Trocknungsmedium nur im feuchtefreien Zustand zugeführt wird.

Ausgehend von dem genannten Stand der Technik liegt der Erfindung die Aufgabe zugrunde, eine Vorrichtung zum Entfeuchten eines hydraulischen Mediums mit zumindest einem gasförmigen Trocknungsmedium anzugeben, die in der Lage ist, dauerhaft und in einfacher Weise den Feuchtegehalt eines hydraulischen Mediums gering zu halten.

Diese Aufgabe wird mit einer Vorrichtung zum Entfeuchten eines hydraulischen Mediums mit den Merkmalen des Patentanspruches 1 in seiner Gesamtheit gelöst.

Gemäß dem Kennzeichen von Anspruch 1 ist vorgesehen, dass die Vorrichtung zumindest einen Sensor zur Bestimmung der Feuchte und der Temperatur des zu dem hydraulischen Medium geführten Trocknungsmediums und einen Sensor zur Bestimmung der Feuchte und der Temperatur des hydraulischen Mediums umfasst.

Die erfindungsgemäße Vorrichtung zum Entfeuchten eines hydraulischen Mediums benutzt als Trocknungsmedium zum Trocknen des hydraulischen Mediums bevorzugt Luft aus der Umgebung des dahingehenden hydraulischen Mediums, bevorzugt ohne Zwischeneinschalten von chemisch wirkenden Feuchte-Absorbern. Die Luft aus der Umgebung des hydraulischen Mediums wird von der Vorrichtung nur dann an das hydraulische Medium gelenkt, wenn die Luft eine geringere Luftfeuchte als diejenige Luft in dem Getriebegehäuse bzw. eine geringere Feuchte als der auf die Temperatur der Umgebungsluft umgerechnete Wasser-Sättigungsgrad des hydraulischen Mediums hat.

Insbesondere bei Getriebegehäusen mit großem Volumen und entsprechend großen Flächen, an denen Kondensat gebildet werden kann, sind große Volumenströme an Luft erforderlich, um das als Schmiermittel vorliegende hydraulische Medium in einem Schmiermittelsumpf zu trocknen. Luft oder Umgebungsluft um das hydraulische Medium außerhalb des Getriebes, die nicht über ein chemisches Absorbens geleitet wird, eignet sich hierbei in besonderem Maße, da diese Umgebungsluft kostenfrei in unbegrenzter Menge zur Verfügung steht. Die Vorrichtung lenkt aufgrund ihrer Konzeption nur dann einen Luftstrom in das Getriebegehäuse oder an das hydraulische Medium, wenn die Feuchte der Luft geringer ist als der auf ihre Temperatur angepasste oder umgerechnete Wasser-Sättigungsgrad des Schmiermittels, so dass die Umgebungsluft in der Lage ist, beim Überströmen des Schmiermittels oder des hydraulischen Mediums diesem Wasser in ausreichendem Maße zu entziehen, um dergestalt das Schmiermittel "zu trocknen".

Die Vorrichtung weist eine Sensorik auf, die in der Lage ist, die Feuchte und die Temperatur der Umgebungsluft sowie des hydraulischen Mediums zu bestimmen. Dabei können induktive, kapazitive oder andere Messverfahren Anwendung finden. Eine Steuerungs- und/oder Regelungseinrichtung der Vorrichtung entnimmt in Abhängigkeit von den gemessenen physikalischen Parametern Luft aus der Umgebung und leitet diese an das jeweilige hydraulische Medium weiter, das bevorzugt im Inneren eines Getriebegehäuses bevorratet wird, wenn die Luft eine geringere Feuchtigkeit aufweist als das hydraulische Medium selbst oder eine etwaig in dem Getriebegehäuse oberhalb des hydraulischen Mediums vorhandene Luftvorratsmenge.

Die Steuer- und/oder Regelungseinrichtung der Vorrichtung zum Entfeuchten eines hydraulischen Mediums steuert bevorzugt ein Gebläse an, das in Betrieb gesetzt ist, sobald die Steuer- und/oder Regelungseinrichtung ein Trocknungspotential bei der Luft in der Umgebung des hydraulischen Mediums erkennt. Im Übrigen kann das Gebläse abgeschaltet sein, d.h. es ist ein intermittierender Trocknungsbetrieb für das hydraulische Medium vorgesehen. Das Trocknungsmedium Luft kann anstelle durch ein Gebläse durch die Ableitung einer entsprechend starken Luftströmung aus der Umgebung des hydraulischen Mediums oder des Getriebegehäuses, wie etwa aus der Umgebung eines Windkraftturmes oder eines zugehörigen Anlagegehäuses, erfolgen. Dazu eignen sich beispielsweise Einlasskanäle, die an ihrem äußeren Ende eine haubenartige Einlasshutze aufweisen, um dadurch nahezu ohne Druckverlust Luft aus der Umgebung ableiten zu können. Bei geringem Druckverlust gelangt dann die Umgebungsluft beispielsweise in das Getriebegehäuse der Windenergieanlage, um darin befindliches Schmieröl durch turbulente Überströmung zu trocknen, was besonders energieeffizient ist.

Die Luft bzw. das Trocknungsmedium kann zusätzlich vor der Zufuhr an das hydraulische Medium über eine Heizeinrichtung gelenkt werden, wobei das dahingehende Heizregister die Luft bzw. das Trocknungsmedium von Restfeuchte befreit, was den möglichen Aufnahmekoeffizienten an Wasser deutlich erhöhen kann.

Die Eintrittsöffnung für das Trocknungsmedium an dem Getriebegehäuse ist vorzugsweise für den Erhalt einer entsprechend langen Verweildauer möglichst weit von einer Austrittsöffnung für das Trocknungsmedium aus dem Getriebegehäuse beabstandet. Zudem kann es vorteilhaft sein, stromauf der Austrittsöffnung einen Trocknungsfilter für das Trocknungsmedium vorzusehen.

Es ergibt sich durch diese vorgeschlagenen konstruktiven Maßnahmen ein möglichst langer Strömungspfad der Luft innerhalb des Getriebegehäuseinneren, wodurch die Verweilzeit der Luft oder des Trocknungsmediums in dem Getriebegehäuse maximal erhöht werden kann. Derartig ist sichergestellt, dass ein räumlich und zeitlich möglichst langer Kontakt zwischen der Luft zum Trocknen des Schmiermittels in dem Getriebegehäuse möglich ist und ein guter Wasseraustausch zwischen dem Schmiermittel und der Umgebungsluft bzw. dem sonst eingesetzten Trocknungsmedium, das auch mit der Luft vermischt sein kann, erfolgt.

Bei einer besonders bevorzugten Ausführungsform ist die Austrittsöffnung für die mit Feuchtigkeit angereicherte Luft in der Nähe einer oder mehrerer Lagerstellen für bewegte Bauteile in dem Getriebegehäuse angeordnet. Es kann auch vorteilhaft sein, ein Lagernest oder ein Lager selbst für bewegte Bauteile oder Wellen in dem Getriebegehäuse mit einer Austrittsöffnung zu versehen. Dergestalt kann auch eine Mehrzahl an Austrittsöffnungen vorhanden sein. Dadurch ist verhindert, dass ein Schmutzeintrag in die Lager stattfinden kann. Dies wird von dem Überdruck in dem Getriebegehäuse verhindert, da ausschließlich das Trocknungsmedium vom Inneren des Getriebegehäuses an den Lagern vorbei nach außerhalb des Getriebegehäuses strömen kann.

Ist das zu trocknende hydraulische Medium Teil eines Getriebes in einer Windenergieanlage, so kann es vorteilhaft sein, zur Erwärmung und Entfeuchtung der Luft oder des Trocknungsmediums diese jeweils durch ein Anlagegehäuse mit Aggregaten, wie Transformatoren, Leistungsbauteilen, wie Frequenzumrichter und Schaltanlagen, zu leiten. Die Luft kann für die genannten Baugruppen dabei auch als Kühlmittel dienen.

Neben der erwähnten Umgebungsluft als Trocknungsmedium kann auch ein sonstiges Arbeitsgas eingesetzt sein mit entsprechender Feuchteaufnahmekapazität. Dabei kann die Luft auch in Durchmischung mit dem dahingehenden Arbeitsgas vorliegen. In weiterer Ausgestaltung der Erfindung kann auch das gasförmige Trocknungsmedium mit Feuchte aufnehmenden Feinstpartikeln zusätzlich ausgestattet sein, die die entsprechende Feuchte mit aufnehmen und dann über eine Filtereinrichtung aus dem gasförmigen Trocknungsmedienstrom auch wieder entfernbar wären. So können in einem geschlossenen Kreislauf die genannten Partikel wieder aufgearbeitet werden, insbesondere indem man die Feuchte durch Trocknung entfernt, mit anschließender erneuter Zugabe in den Gastrocknungsmedienstrom, wobei die geschlossene Kreislaufführung auch mit dem jeweiligen Trocknungsmedium ohne Partikelzufuhr erfolgen kann.

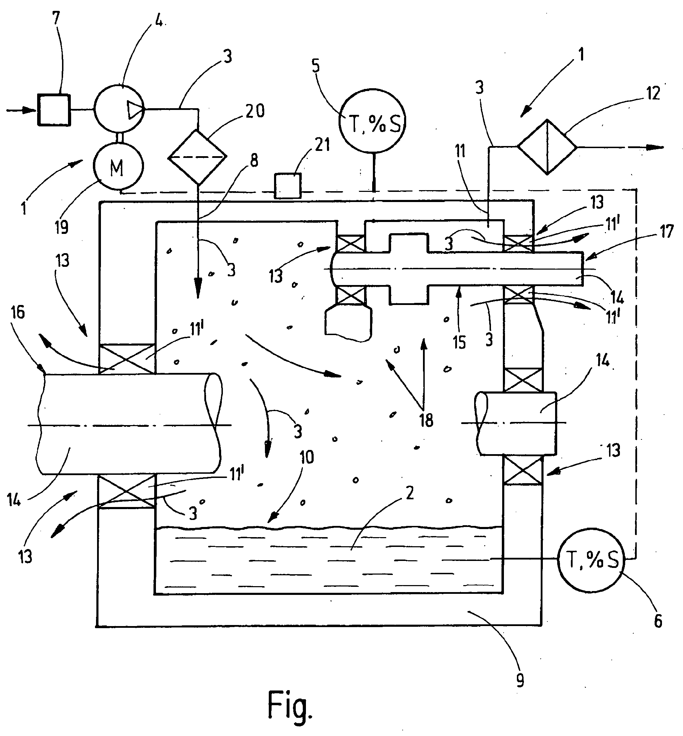

Nachstehend ist die Erfindung anhand eines in der Zeichnung dargestellten Ausführungsbeispiels im Einzelnen näher erläutert.

Es zeigt die einzige Figur einen schematischen Längsschnitt durch ein Getriebe einer Windenergieanlage mit einem Schaltbild einer Einrichtung zur Zufuhr von Umgebungsluft in ein Getriebegehäuse des Getriebes.

In der Figur ist in einem schematischen, nicht maßstäblichen teilweisen Längsschnitt eine Vorrichtung 1 zum Entfeuchten eines hydraulischen Mediums 2 in einem Getriebegehäuse 9 einer Windenergieanlage gezeigt. Dahingehende Getriebe 15 finden Verwendung bei sogenannten Windenergieanlagen, bei denen ein von Windkraft antreibbarer Rotor (nicht dargestellt) seine Antriebsleistung an eine Eingangswelle 16 abgibt. Nach Durchlaufen des Getriebes 15 wird die Antriebsleistung an eine Ausgangswelle 17 abgegeben, an die beispielsweise ein Generator zur Erzeugung von elektrischem Strom angeschlossen sein kann. Der Rotor einer solchen Windenergieanlage weist sehr kleine Drehzahlen und regelmäßig ein hohes Drehmoment auf. Da ein Generator zur Erzeugung elektrischen Stroms höhere Eingangsdrehzahlen benötigt, sieht das Getriebe regelmäßig eine Übersetzung vom Langsamen ins Schnelle von beispielsweise 1:80 vor. Getriebebauarten, wie etwa ein Planetenradgetriebe oder andere schräg- oder geradverzahnte Stirnradgetriebe finden bei solchen Windenergieanlagen gleichermaßen Anwendung.

Das Getriebe 15 ist im vorliegenden gezeigten Ausführungsbeispiel als Stirnradgetriebe mit mehreren Getriebestufen 18 ausgebildet, von denen lediglich teilweise Bauteile oder Wellenstummel gezeigt sind. Es sind insbesondere auch Getriebe in Anwendung mit zwei Getriebestufen, von denen die erste Getriebestufe ein Planetenradgetriebe und die zweite Getriebestufe bevorzugt ein Stirnradgetriebe ist. Die Getriebestufen sind von einem zylinder- oder kastenförmigen Getriebegehäuse 9 umgeben.

In dem gezeigten Ausführungsbeispiel sind die Getriebestufen 18 durch eine Tauchschmierung geschmiert. Hierzu dient ein Vorrat an Schmierstoff 10 in der Art eines Getriebeöls. In einem solchermaßen gebildeten Tauchbad tauchen die Zahnräder (nicht dargestellt) der Getriebestufen 18 zumindest partiell ein, so dass alle in Eingriff befindlichen Zahnflanken und auch die Stirnflächen der Zahnräder mit einem Öl stets benetzt sind.

Solche Getriebe weisen ein nicht unbeträchtliches Volumen innerhalb ihrer Getriebegehäuse auf. Das in dem Getriebegehäuse 9 vorhandene Luftvolumen über dem Schmierstoff 10 ist Temperaturschwankungen zum einen durch sich wetterbedingt ändernde Außentemperaturen ausgesetzt und zum anderen durch den ungleichmäßigen Betrieb bei solchen Windenergieanlagen durch Erwärmung aufgrund von Reibung und Materialdehnungen und Abkühlphasen betreffend das Getriebe selbst. Dadurch wird Kondensat an den häufig sehr gut wärmeleitenden Wänden eines derartigen Getriebegehäuses 9 gebildet. Das herabsinkende Wasser gelangt in einen Schmierstoffsumpf und verschlechtert die Schmierstoff- oder Ölqualität und bewirkt insoweit eine Verkürzung der Öl- oder Schmierstoffwechselintervalle. Zudem kann dadurch Korrosion in dem Inneren des Getriebegehäuses 9 entstehen und durch Ölalterung des Schmierstoffes kann wiederum das Getriebe selbst geschädigt werden.

Um die Ursachen des Wassereintrages in den Schmierstoff 10 zu beseitigen, ist es erfindungsgemäß daher vorgesehen, zum einen die in dem Getriebegehäuse 9 vorhandene feuchte Luft zu beseitigen und zudem dafür zu sorgen, dass trockene Luft in das Getriebegehäuse 9 geleitet wird. Zu diesem Zweck ist eine als Ganzes mit 1 bezeichnete Vorrichtung zum Entfeuchten eines hydraulischen Mediums 2 vorgesehen, wobei durch die Vorrichtung 1 sichergestellt ist, dass nur dann Umgebungsluft als Trocknungsmedium 3 in das Getriebegehäuse 9 gelenkt wird, wenn diese eine geringere Feuchte aufweist als der Wasser-Sättigungsgrad des Schmierstoffes 10 bei vergleichbaren Temperaturen. Ist die Getriebeanlage erwärmt, kommt es im übrigen zu einem permanenten Wasserdampfaustrag aus dem Schmieröl in die darüberliegende Umgebung innerhalb des Getriebegehäuses 9, die von dort, wie dargelegt, zu entfernen ist.

In dem in der Figur gezeigten Ausführungsbeispiel weist die Vorrichtung zur Zufuhr von Umgebungsluft oder zur Bildung eines Umgebungsluft-Stromes in das Innere des Getriebegehäuses 9 eine Fördereinrichtung 4 in Form eines Axialgebläses auf, das von einem Elektromotor 19 angetrieben ist und Umgebungsluft in das Getriebegehäuse 9 ansaugt und über einen Filter 20, der einer Eintrittsöffnung 8 an dem Getriebegehäuse 9 vorgeschaltet ist, ins Innere des Getriebegehäuses 9 bläst. Das Gebläse ist nur dann in Betrieb, wenn der Abgleich von Sensorsignalen eines Sensors 5 zur Bestimmung der Feuchte und der Temperatur des Trocknungsmediums 3 (Umgebungsluft) und eines Sensors 6 zur Bestimmung der Feuchte und Temperatur des Schmierstoffes 10 in einer Steuer- und/oder Regelungseinrichtung 21 ergibt, dass die Umgebungsluft in der Lage ist, Wasser in dem Getriebegehäuse 9 aufzunehmen und durch eine Austrittsöffnung 11 oder mehrere Austrittsöffnungen 11' aus dem Getriebegehäuse 9 zu entfernen. Wie dargestellt, sind mehrere Austrittsöffnungen 11' an dem Getriebegehäuse 9 vorgesehen, die an den Lagerstellen 13 für Wellen 14 in einer Außenwand des Getriebes 9 angeordnet sind.

Es können auch Wälzlager der Wellen 14 direkt von innen nach außen mit der Wasser aufgenommen habenden Umgebungsluft durchströmt werden. Zur Durchströmung der Wälzlager können diese teilweise Durchtrittsstellen (nicht dargestellt) für den Luftstrom im Bereich der Lagerkäfige aufweisen. So ist zudem gewährleistet, dass keine schmutzhaltige Luft in den Bereich der Lagerstellen 13 gelangen kann, da ein Überdrucksystem von innen nach außen geschaffen ist bezogen auf das Innere des Getriebegehäuses 9. Da die Umgebungsluft mit Wasser versehen ist, sind aber entsprechende korrosionsschützende Maßnahmen für die Lagerstellen der Wellen grundsätzlich vorzusehen.

Sofern man die Lagerstellen 13 nicht als Austrittsöffnung 11' nutzen will, besteht auch die Möglichkeit, an einer möglichst weit entfernt von der Eintrittsöffnung 8 liegenden Austrittsöffnung 11 an dem Getriebegehäuse 9 selbst eine Abgabestelle vorzusehen, der ein Trocknungsfilter 12 nachgeschaltet sein kann. Der Trocknungsfilter 12 weist vorzugsweise eine Wasser absorbierende Materialschüttung od. dgl. auf und wird bei einer Außerbetriebstellung des Getriebes 15 und einem damit verbundenen Abkühlen der Luft in dem Getriebegehäuse 9 von außen ins Innere des Getriebegehäuses 9 durchströmt, da im dahingehenden Fall die Luft im Inneren des Getriebegehäuses 9 sich entsprechend zusammenziehen kann. Es besteht aber auch die Möglichkeit, in Durchströmungsrichtung des Trocknungsfilters 12 diesem nachgeordnet eine Vakuum-Saugeinrichtung (nicht dargestellt) vorzusehen, die das Innere des Getriebegehäuses 9, sprich die mit Feuchte beladene Umgebungsluft aus dem Getriebegehäuse in saugender Weise abführen kann. Kommt es zu einer Rückströmung, die gegebenenfalls auch über eine nicht näher dargestellte Ventileinrichtung unterbunden werden kann, würde jedenfalls die insoweit durch die Austrittsöffnung 11 rückströmende Luft vor Eintritt in das Getriebegehäuse 9 an dem Trocknungsfilter 12 getrocknet werden.

Es kann auch eine Heizeinrichtung 7 im Zuströmungspfad des Umgebungsluftstromes zu dem Getriebegehäuse 9 angeordnet sein, wobei Abwärme von Leistungsbausteinen der Windenergieanlage zur Erwärmung mit genutzt werden kann, um die Feuchte der im Getriebegehäuse 9 strömenden Luft entsprechend zu verringern. Je nach Umweltbedingungen ist alternativ oder zusätzlich zu der Heizeinrichtung 7 auch eine Kühleinrichtung (nicht dargestellt) einsetzbar, die vorzugsweise eine Kühlung bis unter den Taupunkt (Entfeuchter) vornimmt.

Anstelle von Umgebungsluft kann auch ein sonstiges Arbeitsgas mit entsprechender Feuchteaufnahmekapazität als Tröcknungsmedium eingesetzt werden. Ferner besteht die Möglichkeit, Umgebungsluft mit einem dahingehenden sonstigen Arbeitsgas zu mischen. Des Weiteren kann vorgesehen sein, in das gasförmige Trocknungsmedium einen Partikelanteil einzubringen, der besonders geeignet ist, Feuchte aufzunehmen. Alternativ oder zusätzlich zu dem Trocknungsfilter 12 könnte dann ein Filter zur Partikelabtrennung aus dem gasförmigen Trocknungsmediumsstrom vorgesehen sein.

## Patentansprüche

1. Vorrichtung zum Entfeuchten eines hydraulischen Mediums (2) mit zumindest einem gasförmigen Trocknungsmedium (3), wobei das Trocknungsmedium (3) Luft und/oder ein sonstiges Arbeitsgas mit entsprechender Feuchteaufnahmekapazität ist, das mittels einer Fördereinrichtung (4) nur dann aus einer Umgebung des hydraulischen Mediums (2) an das hydraulische Medium (2) geführt ist, wenn die Feuchte des jeweiligen gasförmigen Trocknungsmediums (3) geringer ist als der Wasser-Sättigungsgrad des hydraulischen Mediums (2), **dadurch gekennzeichnet, dass** die Vorrichtung (1) zumindest einen Sensor (5) zur Bestimmung der Feuchte und der Temperatur des zu dem hydraulischen Medium (2) geführten Trocknungsmediums (3) und einen Sensor (6) zur Bestimmung der Feuchte und der Temperatur des hydraulischen Mediums (2) umfasst.

2. Vorrichtung nach Anspruch 1, **dadurch gekennzeichnet, dass** die Fördereinrichtung (4) nach Maßgabe der Signale der Sensoren (5,6) mittels einer Steuer- und Regelungseinrichtung (21) ansteuerbar ist.

3. Vorrichtung nach einem der vorhergehenden Ansprüche, **dadurch gekennzeichnet, dass** das Trocknungsmedium (3) über eine Heizeinrichtung (7) gelenkt ist.

4. Vorrichtung nach einem der vorhergehenden Ansprüche, **dadurch gekennzeichnet, dass** die Fördereinrichtung (4) das Trocknungsmedium (3) über eine Eintrittsöffnung (8) an das in einem Gehäuse, insbesondere in einem Getriebegehäuse (9), befindliche hydraulische Medium (2) fördert.

5. Vorrichtung nach einem der vorhergehenden Ansprüche, **dadurch gekennzeichnet, dass** das hydraulische Medium (2) ein Schmierstoff (10) ist, der bevorzugt in einem Getriebegehäuse (9) aufgenommen ist.

6. Vorrichtung nach einem der vorhergehenden Ansprüche, **dadurch gekennzeichnet, dass** die Fördereinrichtung (4) eine Ableiteinrichtung für die Ableitung von bewegtem Trocknungsmedium aus der Umgebung des hydraulischen Mediums (2) mit aufweist.

7. Vorrichtung nach einem der vorhergehenden Ansprüche, **dadurch gekennzeichnet, dass** das Trocknungsmedium (3) an mindestens einer von der Eintrittsöffnung (8) an dem Getriebegehäuse (9) entfernt liegenden Austrittsöffnung (11, 11') aus dem Getriebegehäuse (9) austritt.

8. Vorrichtung nach einem der vorhergehenden Ansprüche, **dadurch gekennzeichnet, dass** stromauf der Austrittsöffnung (11) ein Trocknungsfilter (12) für das Trocknungsmedium (3) angeordnet ist.

9. Vorrichtung nach einem der vorhergehenden Ansprüche, **dadurch gekennzeichnet, dass** die Austrittsöffnung (11') an einer Lagerstelle (13) oder Lagernest für eine Welle (14) an dem Getriebegehäuse (9) angeordnet ist.

10. Vorrichtung nach einem der vorhergehenden Ansprüche, **dadurch gekennzeichnet, dass** die Austrittsöffnung (11') um eine Lagerstelle (13) oder Lagernest für eine Welle (14) an dem Getriebegehäuse (9) angeordnet ist.

11. Vorrichtung nach einem der vorhergehenden Ansprüche, **dadurch gekennzeichnet, dass** das Getriebegehäuse (9) Teil einer Windenergieanlage ist.

12. Vorrichtung nach einem der vorhergehenden Ansprüche, **dadurch gekennzeichnet, dass** diese Teil eines Anlagegehäuses oder Turmes einer Windenergieanlage ist und eine Heizeinrichtung (7) für das Trocknungsmedium (3) durch Aggregate, wie Transformatoren, Frequenzumrichter oder eine Schaltanlage eines Aggregatemoduls der Windanlage ist, deren Abwärme zum Erwärmen des Trocknungsmediums (3) genutzt ist.

## Claims

1. A device for removing moisture from a hydraulic medium (2) that has at least one gaseous drying medium (3), the drying medium (3) being air and/or some other working gas that has a corresponding moisture absorbing capacity that is only conducted by means of a conveying device (4) from an area surrounding the hydraulic medium (2) to the hydraulic medium (2) when the moisture content of the respective gaseous drying medium (3) is lower than the degree of water saturation of the hydraulic medium (2), **characterised in that** the device (1) comprises at least one sensor (5) for determining the moisture content and the temperature of the drying medium (3) conducted to the hydraulic medium (2) and a sensor (6) for determining the moisture content and the temperature of the hydraulic medium (2).

2. The device according to Claim 1, **characterised in that** the conveying device (4) can be actuated as a function of the signals of the sensors (5, 6) by means of a control and regulating unit (21).

3. The device according to any of the preceding claims, **characterised in that** the drying medium (3) is directed over a heating unit (7).

4. The device according to any of the preceding claims, **characterised in that** the conveying device (4) conveys the drying medium (3) via an inlet opening (8) to the hydraulic medium (2) that is located in a housing, in particular in a gear housing (9).

5. The device according to any of the preceding claims, **characterised in that** the hydraulic medium (2) is a lubricant (10) which is preferably received in a gear housing (9).

6. The device according to any of the preceding claims, **characterised in that** the conveying device (4) also has a discharging device for discharging the moved drying medium from the area surrounding the hydraulic medium (2).

7. The device according to any of the preceding claims, **characterised in that** the drying medium (3) passes out of the gear housing (9) at least at one outlet opening (11, 11') that is located a distance away from the inlet opening (8) on the gear housing (9).

8. The device according to any of the preceding claims, **characterised in that** a drying filter (12) for the drying medium (3) is located upstream of the outlet opening (11).

9. The device according to any of the preceding claims, **characterised in that** the outlet opening (11') is located on a bearing location (13) or bearing nest for a shaft (14) on the gear housing (9).

10. The device according to any of the preceding claims, **characterised in that** the outlet opening (11') is located around a bearing location (13) or bearing nest for a shaft (14) on the gear housing (9).

11. The device according to any of the preceding claims, **characterised in that** the gear housing (9) is part of a wind turbine.

12. The device according to any of the preceding claims, **characterised in that** this device is part of a system housing or tower of a wind turbine and is a heating unit (7) for the drying medium (3) by means of units, such as transformers, frequency converters or a switching system of a unit module of the wind turbine, the waste heat of which is used for heating the drying medium (3).

## Revendications

1. Dispositif de déshydratation d'un fluide (2) hydraulique par au moins un fluide (3) gazeux de dessiccation, le fluide (3) de dessiccation étant de l'air et/ou un autre gaz de travail ayant une capacité adéquate d'absorption de l'humidité, qui est, au moyen d'un dispositif (4) de transport, envoyé de ce qui est autour du fluide (2) hydraulique au fluide (2) hydraulique que si l'humidité du fluide (3) gazeux de dessiccation est plus petite que le degré de saturation en eau du fluide (2) hydraulique, **caractérisé en ce que** le dispositif (1) comprend au moins une sonde (5) de détermination de l'humidité et de la température du fluide (3) de dessiccation envoyé au fluide (2) hydraulique et une sonde (6) de détermination de l'humidité et de la température du fluide (2) hydraulique.

2. Dispositif suivant la revendication 1, **caractérisé en ce que** le dispositif (4) de transport peut être commandé en fonction des signaux des sondes (5, 6) au moyen d'un dispositif (21) de commande et de régulation.

3. Dispositif suivant l'une des revendications précédentes, **caractérisé en ce que** le fluide (3) de dessiccation est dirigé sur un dispositif (7) de chauffage.

4. Dispositif suivant l'une des revendications précédentes, **caractérisé en ce que** le dispositif (4) de transport transporte le fluide (3) de dessiccation par une ouverture (8) d'entrée au fluide (2) hydraulique se trouvant dans un carter, notamment dans un carter (9) d'une transmission.

5. Dispositif suivant l'une des revendications précédentes, **caractérisé en ce que** le fluide (2) hydraulique est un lubrifiant (10), qui est reçu, de préférence, dans un carter (9) d'une transmission

6. Dispositif suivant l'une des revendications précédentes, **caractérisé en ce que** le dispositif (4) de transport a un dispositif de dérivation pour dériver du fluide de dessiccation déplacé hors de ce qui entoure le fluide (2) hydraulique.

7. Dispositif suivant l'une des revendications précédentes, **caractérisé en ce que** le fluide (3) de dessiccation sort du carter (9) d'une transmission à au moins une ouverture (11, 11') de sortie, éloignée de l'ouverture (8) d'entrée du carter (9) d'une transmission.

8. Dispositif suivant l'une des revendications précédentes, **caractérisé en ce qu'**un filtre (12) de séchage du fluide (3) de dessiccation est monté en amont de l'ouverture (11) de sortie.

9. Dispositif suivant l'une des revendications précédentes, **caractérisé en ce que** l'ouverture (11') de sortie est mise sur le carter (9) de la transmission en un point (13) de palier ou sur un palier fermé pour un arbre (14).

10. Dispositif suivant l'une des revendications précédentes, **caractérisé en ce que** l'ouverture (11') de sortie est mise sur le carter (9) de la transmission autour d'un point (13) de palier ou d'un palier fermé pour un arbre (14).

11. Dispositif suivant l'une des revendications précédentes, **caractérisé en ce que** le carter (9) de la transmission fait partie d'une éolienne.

12. Dispositif suivant l'une des revendications précédentes, **caractérisé en ce que** cette partie est un carter d'installation ou une tour d'une éolienne et est un dispositif (7) de chauffage du fluide (3) de dessiccation par des groupes, comme des transformateurs, des convertisseurs de fréquence ou une installation de distribution d'un module de groupe de l'éolienne, dont la chaleur perdue est utilisée pour réchauffer le fluide (3) de dessiccation.
